# EUROPÄISCHE PATENTSCHRIFT

(11) **EP 2 993 029 B1**
(45) Veröffentlichungstag und Bekanntmachung des Hinweises auf die Patenterteilung: **30.11.2016**
(21) Anmeldenummer: 14183840.9
(22) Anmeldetag: 05.09.2014
(51) Int. Cl.: B29C 65/64, B23K 20/12, B29K 105/16, B29K 507/04, B29K 505/00, B29K 505/12, B29K 505/10, B29K 505/02, B29K 505/14

(54) **Verfahren zum Herstellen einer leitfähigen Verbindung zwischen einem Metallbauteil und einem Nanokomposit-Bauteil**
Method for producing a conductive connection between a metal component and a nano composite component
Procédé de fabrication d'une liaison conductrice entre un composant métallique et un composant nanocomposite

(43) Veröffentlichungstag der Anmeldung: 09.03.2016
(73) Patentinhaber: Helmholtz-Zentrum Geesthacht Zentrum für Material- und Küstenforschung GmbH, 21502 Geesthacht (DE)
(72) Erfinder: Junior, Wiebke Sophie, 38106 Braunschweig (DE); de Traglia Amancio Filho, Sergio, 21039 Börnsen (DE); Abetz, Volker, 21335 Lüneburg (DE); dos Santos, Jorge Fernandez, 21395 Tespe (DE)
(74) Vertreter: Uexküll & Stolberg

(56) Entgegenhaltungen:
- EP-A1- 2 329 905

## Beschreibung

Die vorliegende Erfindung betrifft ein Verfahren zum Herstellen einer leitfähigen Verbindung zwischen einem Metallbauteil und einem elektrisch leitfähigen Nanokomposit-Bauteil.

Nanokomposit-Bauteile, bei denen Nanopartikel, wie Kohlenstoff-Nanoröhren oder mehrwandige Kohlenstoff-Nanoröhren, in eine Kunststoff- oder Polymermatrix eingebettet sind, sind aus dem Stand der Technik bekannt. Dabei ist es auch bekannt, dass durch geeignete Wahl der Nanopartikel elektrisch leitfähige Kunststoffbauteile hergestellt werden können.

Allerdings hat es sich als Problem erwiesen, derartige leitfähige Kunststoffbauteile mit Metallbauteilen so zu verbinden, dass eine leitfähige Verbindung zwischen den beiden Bauteilen erreicht wird. Insbesondere ist es bisher nicht gelungen, einen Prozess zur Verfügung zu stellen, der eine solche leitfähige Verbindung zwischen einem Metallbauteil und einem leitfähigen Kunststoffbauteil schnell und kostengünstig sowie mit guten mechanischen Eigenschaften ermöglicht.

Die EP 2 329 905 A1 offenbart ein Verfahren zur Verbindung eines Metallwerkstücks mit einem Kunststoffwerkstück, die aneinander anliegen, mit Hilfe eines rotierend angetriebenen Werkzeugs. Dabei wird ein rotierender Stift, der sich in einer rotierenden Hülse befindet, in das Metallwerkstück getrieben. Dadurch entsteht an der Grenzfläche zwischen dem Metallwerkstück und dem Kunststoffwerkstück eine Verbindung.

Daher ist es ausgehend vom Stand der Technik die Aufgabe der vorliegenden Erfindung, ein Verfahren bereitzustellen, mit dem Nanokomposit-Bauteile in leitfähiger Weise mit Metallbauteilen verbunden werden können.

Erfindungsgemäß wird diese Aufgabe durch ein Verfahren mit den folgenden Schritten gelöst:
- Bereitstellen eines Metallbauteils und eines leitfähigen Nanokomposit-Bauteils, das ein Kunststoffmatrixmaterial und darin verteilte Nanopartikel aufweist,
- Anordnen des Metallbauteils und des Nanokomposit-Bauteils derart, dass Anlageflächen der Werkstücke aneinander anliegen,
- Anordnen eines Reibfügewerkzeugs auf einer dem Nanokomposit-Bauteil abgewandten Oberfläche des Metallbauteils,
   wobei das Reibfügewerkzeug einen Stift, der entlang seiner axialen Richtung beweglich und drehend angetrieben ist, und eine Hülse, die den Stift umgibt, drehend angetrieben ist und in der axialen Richtung des Stifts beweglich ist, aufweist und
   wobei die Vorderenden des Stifts und der Hülse auf der dem Nanokomposit-Bauteil abgewandten Oberfläche des Metallbauteils aufliegen,
- Drehen der Hülse und des Stifts, um Reibung zwischen dem Vorderende der Hülse und des Stifts sowie der dem Nanokomposit-Bauteil abgewandten Oberfläche des Metallbauteils zu erzeugen,
- Bewegen des Stifts und der Hülse in der axialen Richtung des Stifts, während beide gedreht werden, wobei einer aus der Hülse und dem Stift in das Metallbauteil eindringt und der andere aus der Hülse und dem Stift von dem Nanokomposit-Bauteil abgewandten Oberfläche des Metallbauteils zurückgezogen wird,
   wobei die axiale Bewegung in das Metallbauteil beendet wird, bevor der eine aus der Hülse und dem Stift die Anlagefläche zwischen dem Metallbauteil und dem Nanokomposit-Bauteil erreicht, und
   wobei nach dem Beenden der axialen Bewegung der eine aus der Hülse und dem Stift von dem Metallbauteil zurückgezogen wird und der andere zu der dem Nanokomposit-Bauteil abgewandten Oberfläche des Metallbauteils hin bewegt wird, bis die vorderen Enden des Stifts und der Hülse in derselben Ebene sind.

Bei dem erfindungsgemäßen Verfahren wird das Nanokomposit-Bauteil mittels einer Reibpunktverbindung mit dem Metallbauteil verbunden, wobei das Reibfügewerkzeug auf der von dem Nanokomposit-Bauteil abgewandten Oberfläche des Metallbauteils angelegt wird und auf dieser Oberfläche Reibung erzeugt, die das Metallbauteil zumindest partiell plastifiziert. In der Folge wird auch das Nanokomposit-Bauteil bzw. dessen Kunststoffmaterialmatrix partiell plastifiziert, und im Bereich der Anlagefläche zwischen den Bauteilen wird eine Verbindung gebildet.

Überraschenderweise hat sich nun herausgestellt, dass an dieser Stelle trotz der vorhandenen Grenzfläche zwischen dem Metall und dem Kunststoffmaterial eine leitfähige Verbindung erzeugt wird. Dies wäre eigentlich aufgrund der Grenzfläche und möglicher Verunreinigungen nicht zu erwarten gewesen. Insbesondere reicht auch schon ein geringer Anteil von Nanopartikeln in dem Nanokomposit-Bauteil, d. h. weniger als 5 Gew.-% und vorzugsweise weniger als 3 Gew.-%, um diese leitfähige Verbindung zu erreichen.

Damit wird es möglich, ein elektrisch leitfähiges KunststoffBauteil in leitfähiger Weise mit einem Metallbauteil zu verbinden, wobei das Verbindungsverfahren schnell, beispielsweise mit Hilfe eines Roboters, ausgeführt werden kann.

Damit ist es denkbar, dass beispielsweise im Automobilbereich Kunststoffbauteile, die leitfähig sind, leitend mit Metallbauteilen verbunden werden. Der Verbindungsprozess kann dabei in herkömmliche Montageprozesse integriert werden. Der sich daraus ergebende weitere Vorteil ist, dass derartige zusammengesetzte Bauteile dann zusammen elektrochemisch tauchlackiert werden können und somit Farbunterschiede zwischen Metall- und Kunststoffbauteil vermieden werden, da die Teile des zusammengesetzten Bauteils selber leitfähig und auch leitend miteinander verbunden sind.

Darüber hinaus können mit Hilfe dieser Verbindungstechnik leicht beheizte Kunststoffelemente im Inneren von Fahrzeugen realisiert werden, wobei die elektrische Ankopplung der beheizten Kunststoffbauteile wiederum mittels des erfindungsgemäßen Verfahrens an einen metallischen Leiter erfolgt.

In bevorzugter Weise handelt es sich bei den Nanopartikeln, die in dem Nanokomposit-Bauteil verteilt sind, um Metallpartikel, insbesondere aus Eisen, Kupfer, Aluminium, Nickel, Silber oder Gold, wobei die Korngröße dieser Metallpartikel mehr als 1 nm beträgt. Es kann auch ausreichend sein, wenn zumindest eine Dimension der Partikel größer als 1 nm ist. Derartige Partikel haben sich als vorteilhaft erwiesen, da bereits ein Gewichtsanteil im Bereich von 3 Gew.-% ausreicht, zu einer elektrischen Leitfähigkeit zu führen. Außerdem können derartige Partikel in einfacher Weise in die Kunststoffmaterialmatrix eingebracht werden.

Alternativ ist es auch möglich, dass als Nanopartikel Kohlenstoff-Nanoröhren (CNT) und insbesondere mehrwandige Kohlenstoff-Nanoröhren (MWCNT) sowie Graphene oder Fullerene verwendet werden. Hier ist es ebenfalls möglich, die Nanopartikel chemisch zu funktionalisieren, vorzugsweise mit einer Pyren-POSS-Verbindung. Dies stellt sicher, dass sich die Nanopartikel gut in der Kunststoffmaterialmatrix verteilen und somit die Eigenschaften der Nanopartikel optimal für das Nanokomposit ausgenutzt werden können. Außerdem ist nur ein sehr geringer Gew.-%-Anteil dieser Nanoröhren erforderlich, damit ein Nanokomposit-Bauteil selbst und auch die erfindungsgemäß gebildete Verbindung die erforderliche Leitfähigkeit erhält.

Weiterhin ist es bevorzugt, wenn für das Kunststoffmatrixmaterial Polymethylmethacrylat (PMMA) oder Polycarbonat verwendet wird. Es kommen aber grundsätzlich alle thermoplastischen Polymere in Frage. Die Erfindung ist damit nicht auf die zuerst genannten Matrixmaterialien beschränkt, sondern es können ebenfalls andere Kunststoffmaterialien verwendet werden.

Schließlich hat es sich als vorteilhaft erwiesen, wenn die Oberfläche des Metallbauteils, die an das Nanokomposit-Bauteil angelegt wird, zuvor aufgeraut wird, beispielsweise durch Sandstrahlen. Dabei hat sich gezeigt, dass die Leitfähigkeit der Verbindung zwischen den Bauteilen weiter verbessert wird.

Im Folgenden wir die vorliegende Erfindung anhand einer lediglich zwei bevorzugte Ausführungsbeispiele zeigenden Zeichnung erläutert, wobei
- Fig. 1: die Schritte eines ersten Ausführungsbeispiels des erfindungsgemäßen Verfahrens zeigt und
- Fig. 2: die Schritte eines zweiten Ausführungsbeispiels zeigt.

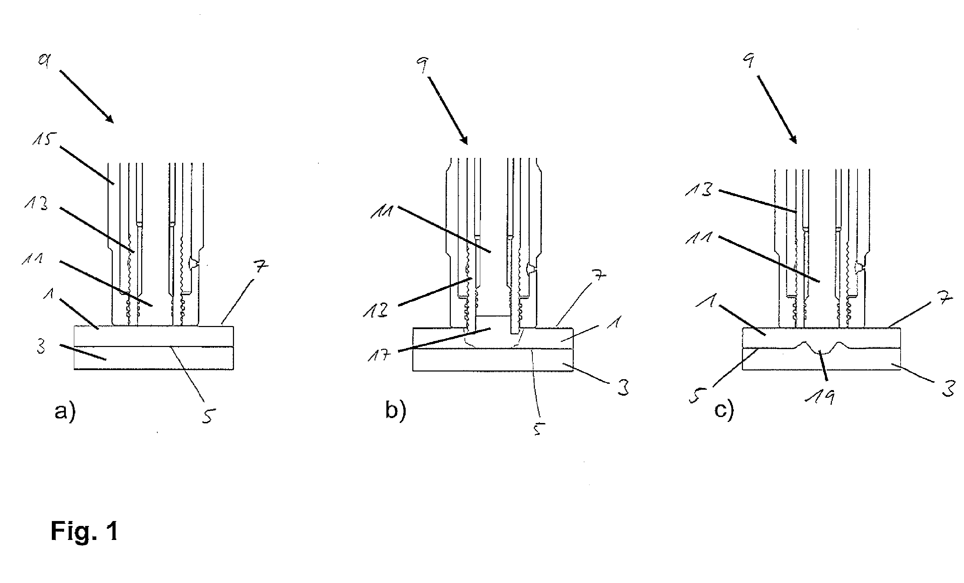

Bei dem ersten, in Fig. 1 wiedergegebenen Ausführungsbeispiel eines erfindungsgemäßen Verfahrens werden zunächst ein Metallbauteil 1 und ein Nanokomposit-Bauteil 3 bereitgestellt, wobei diese derart angeordnet werden, dass Anlageflächen des Metallbauteils 1 und des Nanokomposit-Bauteils 3 aneinander anliegen.

Bei dem Metallbauteil 1 kann es sich vorzugsweise um ein Aluminium-Bauteil handeln, das neben der Anlagefläche 5 eine weitere parallel dazu verlaufende Oberfläche 7 hat. Es ist aber im Rahmen der vorliegenden Erfindung auch möglich, dass das Metallbauteil 1 aus einem anderen Metall, wie Eisen, Kupfer, Nickel oder dergleichen, oder einer Legierung hergestellt ist.

Das Nanokomposit-Bauteil 3 weist ein Kunststoffmatrixmaterial auf, wobei darin verteilt Nanopartikel enthalten sind. Das Kunststoffmatrixmaterial kann beispielsweise Polymethylmethacrylat (PMMA) oder Polycarbonat sein. Es sind aber auch andere Kunststoff- bzw. Polymermaterialien denkbar.

Bei den Nanopartikeln kann es sich beispielsweise um Metallpartikel, insbesondere aus Eisen, Kupfer, Aluminium, Nickel, Silber oder Gold, handeln, wobei deren Korngröße größer als 1 nm ist.

Alternativ können als Nanopartikel auch Kohlenstoff-Nanoröhren (CNT; Carbon Nano Tubes) und insbesondere mehrwandige Kohlenstoff-Nanoröhren (MWCNT; Multi Walled Carbon Nano Tubes) verwendet werden. Es ist auch möglich, dass Graphene oder Fullerene zur Anwendung kommen. In jedem Fall ist der Anteil der Nanopartikel vergleichsweise gering und beträgt weniger als 5 Gew.-%, vorzugsweise weniger als 3 Gew.-%.

Vor dem Anordnen des Metallbauteils 1 auf dem Nanokomposit-Bauteil 3 kann die zu dem Nanokomposit-Bauteil 3 weisende Anlagefläche 5 des Metallbauteils 1 vorzugsweise durch Sandstrahlen aufgeraut werden, was die weiter Verbindungseigenschaften verbessert.

Ein Reibfügewerkzeug 9 weist einen drehend angetriebenen Stift 11 auf, der axial beweglich ist und von einer ebenfalls drehend angetriebenen und axial beweglichen Hülse 13 umgeben ist. Die Hülse 13 wiederum ist von einer feststehenden Klemmhülse 15 umgeben. Das Reibfügewerkzeug wird derart auf die von dem Nanokomposit-Bauteil 3 abgewandte Oberfläche 7 des Metallbauteils 1 aufgesetzt, dass die Enden oder Stirnflächen des Stifts 11 und der Hülse 13 auf der Oberfläche 7 aufliegen (siehe Schritt a) in Fig. 1).

Anschließend werden der Stift 11 und die Hülse 13 durch einen nicht dargestellten Drehantrieb in Drehung versetzt, so dass Reibung zwischen den Vorderenden der Hülse 13 und des Stifts 11 sowie der dem Nanokomposit-Bauteil 3 abgewandten Oberfläche 7 des Metallbauteils 1 erzeugt wird. In der Folge wird der Bereich des Metallbauteils 1 gegenüber dem Stift 11 und der Hülse 13 plastifiziert, wobei dieser plastifizierte Bereich 17 sich bis hin zu der Anlagefläche 5 des Metallbauteils 1, die zu dem Nanokomposit-Bauteil 3 weist, erstreckt. Dabei wird die Hülse 13 in axialer Richtung in den plastifizierten Bereich 17 hinein bewegt, und parallel dazu bewegt sich der Stift 11 in axialer Richtung weg von der Oberfläche 7 des Metallbauteils 1. Dadurch kann das von der Hülse 13 verdrängte Material im Inneren der Hülse 13 aufgenommen werden (siehe Schritt b) in Fig. 1).

Bevor das Vorderende der Hülse 13 die Anlagefläche 5 des Metallbauteils 1 erreicht, mit der dieses an dem Nanokomposit-Bauteil 3 anliegt, wird die axiale Bewegung der Hülse 13 und die des Stifts 11 gestoppt, und die Hülse 13 wird in axialer Richtung unter fortgesetzter Drehung zurück aus dem Metallbauteil 1 herausgezogen, während sich der Stift 11 auch unter fortgesetzter Drehung wieder hin zu der Oberfläche 7 des Metallbauteils 1 bewegt.

Wenn die Enden der Hülse 13 und des Stifts 11 in einer Ebene verlaufen (Schritt c) in Fig. 1), wird die axiale Bewegung von Stift 11 und Hülse 13 gestoppt, wobei dann durch die Plastifizierung des Metallbauteils 1 und des Nanokomposit-Bauteils 3 ein Verbindungsbereich 19 erzeugt worden ist.

Überraschenderweise hat sich gezeigt, dass in diesem Bereich 19 eine leitfähige Verbindung zwischen dem an sich bereits leitfähigen Nanokomposit-Bauteil 3 und dem Metallbauteil 1 erzeugt worden ist, obwohl dies aufgrund der nach wie vor vorhandenen Grenzfläche zwischen beiden Bauteilen 1, 3 nicht zu erwarten gewesen wäre. Widerstandsmessungen haben aber gezeigt, dass die Leitfähigkeit dieses Verbindungsbereichs 19 außerordentlich gut ist, auch wenn der Nanopartikel in der Kunststoffmatrix bzw. im Nanokomposit-Bauteil in den bereits angegebenen niedrigen Grenzen liegt.

Somit wird ein einfach zu handhabendes Verfahren bereitgestellt, mit dem ein leitfähiges Nanokomposit-Bauteil 3 mit einem Metallbauteil 1 verbunden werden kann.

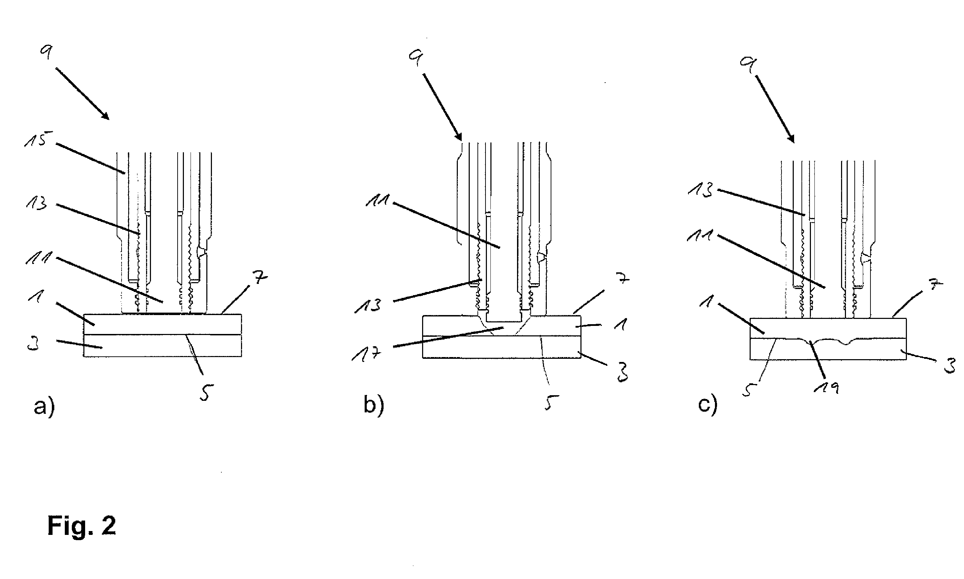

Bei dem zweiten in Fig. 2 dargestellten Ausführungsbeispiel wird im Unterschied zu dem ersten Ausführungsbeispiel der drehend angetriebene Stift 11 in axialer Richtung in den plastifizierten Bereich 17 des Metallbauteils 1 hinein bewegt, während die Hülse 13 in axialer Richtung weg von der Oberfläche 7 des Metallbauteils 1 bewegt wird. Die axiale Bewegung des Stifts 11 wird jedoch ebenfalls gestoppt, bevor das Vorderende des Stifts 11 die Anlagefläche 5 hin zu dem Nanokomposit-Bauteil 3 erreicht hat, und anschließend wird der Stift 11 wieder in axialer Richtung aus dem plastifizierten Bereich 17 heraus bewegt.

Auch bei diesem zweiten Ausführungsbeispiel des Verfahrens der vorliegenden Erfindung wird wiederum eine leitfähige Verbindung 19 zwischen dem Metallbauteil 1 und dem Nanokomposit-Bauteil 3 erreicht.

## Patentansprüche

1. Verfahren zum Herstellen einer leitfähigen Verbindung zwischen einem Metallbauteil (1) und einem elektrisch leitfähigen Nanokomposit-Bauteil (3) umfassend die folgenden Schritte:
- Bereitstellen eines Metallbauteils (1) und eines leitfähigen Nanokomposit-Bauteils (3), das ein Kunststoffmatrixmaterial und darin verteilte Nanopartikel aufweist,
- Anordnen des Metallbauteils (1) und des Nanokomposit-Bauteils (3) derart, dass Anlageflächen der Werkstücke aneinander anliegen,
- Anordnen eines Reibfügewerkzeugs (9) auf einer dem Nanokomposit-Bauteil (3) abgewandten Oberfläche (7) des Metallbauteils (1),
wobei das Reibfügewerkzeug (9) einen Stift (11), der entlang seiner axialen Richtung beweglich und drehend angetrieben ist, und eine Hülse (13), die den Stift (11) umgibt, drehend angetrieben ist und in der axialen Richtung des Stifts (11) beweglich ist, aufweist und
wobei die Vorderenden des Stifts (11) und der Hülse (13) auf der dem Nanokomposit-Bauteil (3) abgewandten Oberfläche (7) des Metallbauteils (1) aufliegen,
- Drehen der Hülse (13) und des Stifts (11), um Reibung zwischen dem Vorderende der Hülse (13) und des Stifts (11) sowie der dem Nanokomposit-Bauteil (3) abgewandten Oberfläche (7) des Metallbauteils (1) zu erzeugen,
- Bewegen des Stifts (11) und der Hülse (13) in der axialen Richtung des Stifts (11), während beide gedreht werden, wobei einer aus der Hülse (13) und dem Stift (11) in das Metallbauteil (1) eindringt und der andere aus der Hülse (13) und dem Stift (11) von dem Nanokomposit-Bauteil (3) abgewandten Oberfläche (7) des Metallbauteils (1) zurückgezogen wird,
wobei die axiale Bewegung in das Metallbauteil (1) beendet wird, bevor der eine aus der Hülse (13) und dem Stift (11) die Anlagefläche (5) zwischen dem Metallbauteil (1) und dem Nanokomposit-Bauteil (3) erreicht, und
wobei nach dem Beenden der axialen Bewegung der eine aus der Hülse (13) und dem Stift (11) von dem Metallbauteil (1) zurückgezogen wird und der andere zu der dem Nanokomposit-Bauteil (3) abgewandten Oberfläche (7) des Metallbauteils (1) hin bewegt wird, bis die vorderen Enden des Stifts (11) und der Hülse (13) in derselben Ebene sind.

2. Verfahren nach Anspruch 1, wobei die Nanopartikel Metallpartikel, insbesondere aus Eisen, Kupfer, Aluminium, Nickel, Silber oder Gold, mit einer mittleren Korngröße von mehr als 1 nm sind.

3. Verfahren nach Anspruch 1, wobei die Nanopartikel Kohlenstoffnanoröhren (CNT) und insbesondere mehrwandige Kohlenstoffnanoröhren (MWCNT) oder Graphene oder Fullerene sind.

4. Verfahren nach Anspruch 3, wobei die Kohlenstoffnanoröhren funktionalisiert sind, vorzugsweise mit Pyren-POSS.

5. Verfahren nach einem der Ansprüche 1 bis 4, wobei das Nanokomposit-Bauteil (3) weniger als 5 Gew.-%, vorzugsweise weniger als 3 Gew.-% Nanopartikel enthält.

6. Verfahren nach einem der Ansprüche 1 bis 5, wobei das Kunststoffmatrixmaterial Polymethylmethacrylat (PMMA) oder Polycarbonat ist.

7. Verfahren nach einem der Ansprüche 1 bis 6, wobei die Oberfläche (7) des Metallbauteils (1), die an das Nanokomposit-Bauteil (3) angelegt wird, aufgeraut wird, vorzugsweise durch Sandstrahlen.

8. Leitfähige Verbindunganordnung aus einem Metallbauteil (1) und einem Nanokomposit-Bauteil (3), die entlang aneinander anliegender Oberflächen miteinander verbunden sind, wobei die Verbindung mit dem Verfahren nach einem der Ansprüche 1 bis 7 hergestellt ist.

## Claims

1. Method for producing a conductive connection between a metal component (1) and an electrically conductive nanocomposite component (3) comprising the following steps:
- providing a metal component (1) and a conductive nanocomposite component (3) comprising a plastic matrix material and nanoparticles distributed therein,
- positioning the metal component (1) and the nanocomposite component (3) in such a way that contact surfaces of the workpieces abut one another,
- positioning a friction joining tool (9) on a surface (7) of the metal component (1) remote from the nanocomposite component (3),
the friction joining tool (9) comprising a pin (11) which is driven in displacement along its axial direction and in rotation, and a sleeve (13) surrounding the pin (11) driven in rotation and in the axial direction of the pin (11), and
the front ends of the pin (11) and the sleeve (13) lying on the surface (7) of the metal component (1) remote from the nanocomposite component (3),
- rotating the sleeve (13) and the pin (11) in order to generate friction between the front ends of the sleeve (13) and the pin (11) and the surface (7) of the metal component (1) remote from the nanocomposite component (3),
- moving the pin (11) and the sleeve (13) in the axial direction of the pin (11) whilst the two are being rotated, one of the sleeve (13) and the pin (11) penetrating the metal component (1) and the other of the sleeve (13) and the pin (11) being retracted from the surface (7) of the metal component (1) remote from the nanocomposite component (3),
the axial movement into the metal component (1) being terminated before one of the sleeve (13) and the pin (11) reaches the contact surface (5) between the metal component (1) and the nanocomposite component (3), and
after terminating the axial movement, one of the sleeve (13) and the pin (11) being retracted from the metal component (1) and the other being moved towards the surface (7) of the metal component (1) remote from the nanocomposite component (3) until the front ends of the pin (11) and the sleeve (13) are in the same plane.

2. Method as claimed in claim 1, wherein the nano-particles are metal particles, in particular of iron, copper, aluminium, nickel, silver or gold, with an average grain size of more than 1 nm.

3. Method as claimed in claim 1, wherein the nanoparticles are carbon nanotubes (CNT) and in particular multi-walled carbon nanotubes (MWCNT) or graphene or fullerene.

4. Method as claimed in claim 3, wherein the carbon nanotubes are functionalised, preferably with pyrene-POSS.

5. Method as claimed in one of claims 1 to 4, wherein the nanocomposite component (3) contains less than 5% by weight, preferably less than 3% by weight, of nanoparticles.

6. Method as claimed in one of claims 1 to 5, wherein the plastic matrix material is polymethylmethacrylate (PMMA) or polycarbonate.

7. Method as claimed in one of claims 1 to 6, wherein the surface (7) of the metal component (1) which is placed on the nanocomposite component (3) is roughened, preferably by means of sanblasting.

8. Conductive joined assembly, comprising a metal component (1) and a nanocomposite component (3) which are joined to one another along mutually abutting surfaces, wherein the joint is produced by means of the method as claimed in one of claims 1 to 7.

## Revendications

1. Procédé de réalisation d'une liaison conductrice entre un élément métallique (1) et un élément nanocomposite (3) électroconducteur, comprenant les étapes suivantes :
- mise à disposition d'un élément métallique (1) et d'un élément nanocomposite (3) conducteur qui présente un matériau de matrice en matière plastique et des nanoparticules réparties dans celui-ci,
- disposition de l'élément métallique (1) et de l'élément nanocomposite (3), de manière à ce que des surfaces d'appui des pièces soient appliquées l'une contre l'autre,
- disposition d'un outil d'assemblage par friction (9) sur une surface (7) de l'élément métallique (1) qui est opposée à l'élément nanocomposite (3),
l'outil d'assemblage par friction (9) présentant une tige (11), qui est déplaçable le long de sa direction axiale et est entraînée en rotation, et un tube (13) qui entoure la tige (11), est entraîné en rotation et est déplaçable dans la direction axiale de la tige (11), et
les extrémités avant de la tige (11) et du tube (13) étant en appui sur la surface (7) de l'élément métallique (1) qui est opposée à l'élément nanocomposite (3),
- mise en rotation du tube (13) et de la tige (11) afin de produire une friction entre l'extrémité avant du tube (13) et de la tige (11) et la surface (7) de l'élément métallique (1) opposée à l'élément nanocomposite (3),
- déplacement de la tige (11) et du tube (13) dans la direction axiale de la tige (11), pendant que les deux sont mis en rotation, où l'un des éléments parmi le tube (13) et la tige (11) pénètre dans l'élément métallique (1) et l'autre élément parmi le tube (13) et la tige (11) est retiré de la surface (7) de l'élément métallique (1) opposée à l'élément nanocomposite (3),
le mouvement axial dirigé dans l'élément métallique (1) étant arrêté avant que l'un des éléments parmi le tube (13) et la tige (11) n'ait atteint la surface d'appui (5) entre l'élément métallique (1) et l'élément nanocomposite (3), et
après l'arrêt du mouvement axial, l'un des éléments parmi le tube (13) et la tige (11) est retiré de l'élément métallique (1) et l'autre élément est déplacé en direction de la surface (7) de l'élément métallique (1) qui est opposée à l'élément nanocomposite (3), jusqu'à ce que les extrémités avant de la tige (11) et du tube (13) se trouvent dans le même plan.

2. Procédé selon la revendication 1, selon lequel les nanoparticules sont des particules métalliques, notamment en fer, cuivre, aluminium, nickel, argent ou or, avec une grosseur de grain moyenne de plus de 1 nm.

3. Procédé selon la revendication 1, selon lequel les nanoparticules sont des nanotubes de carbone (CNT) et en particulier des nanotubes de carbone à parois multiples (MWCNT) ou des graphènes ou des fullerènes.

4. Procédé selon la revendication 3, selon lequel les nanotubes de carbone sont fonctionnalisés, de préférence avec du pyrène-poss.

5. Procédé selon l'une des revendications 1 à 4, selon lequel l'élément nanocomposite (3) contient moins de 5 % en poids, de préférence moins de 3 % en poids de nanoparticules.

6. Procédé selon l'une des revendications 1 à 5, selon lequel le matériau de matrice en matière plastique est du poly(méthacrylate de méthyle) (PMMA) ou du polycarbonate.

7. Procédé selon l'une des revendications 1 à 6, selon lequel la surface (7) de l'élément métallique (1) qui est appliquée contre l'élément nanocomposite (3) est rendue rugueuse, de préférence par sablage.

8. Dispositif de liaison conducteur constitué d'un élément métallique (1) et d'un élément nanocomposite (3), qui sont reliés l'un à l'autre le long de surfaces appliquées l'une contre l'autre, la liaison étant réalisée par le procédé selon l'une des revendications 1 à 7.
